# EUROPÄISCHE PATENTANMELDUNG

(11) **EP 0 570 924 A2**
(43) Veröffentlichungstag der Anmeldung: **24.11.1993**
(21) Anmeldenummer: 93108119.4
(22) Anmeldetag: 18.05.1993
(51) Int. Cl.: G07F 7/10

(54) **Verfahren zur Authentifizierung eines Systemteiles durch einen anderen Systemteil in einem Informationsübertragungssystem bestehend aus einem Terminal und einer tragbaren Datenträgeranordnung**

(30) Priorität: 20.05.1992 DE 4216713
(71) Anmelder: SIEMENS AKTIENGESELLSCHAFT, D-80333 München (DE)
(72) Erfinder: Schrenk, Hartmut, Dr. re. nat., W-8013 Haar (DE)

(57) **Zusammenfassung**

Verfahren zur Autentifizierung eines Systemteiles durch einen anderen Systemteil in einem Informationsübertragungssystem aus einem Terminal und einer tragbaren Datenträgeranordnung nach dem "Challange-and-Response"-Prinzip. Zur Durchführung eines jeden Autentifikationsvorganges muß zusätzlich eine vorgegebene elektronische Bedindung erfüllt sein, die Häufigkeit, mit der diese Bedingung erfüllt sein kann, eingeschränkt ist. Als Bedingung wird der Programmierzustand eines nichtflüchtigen Speichers oder eine Zählerstandsänderung vorgeschlagen.

## Beschreibung

Die Erfindung betrifft ein Verfahren zur Autentifizierung eines Systemteiles durch einen anderen Systemteil in einem Informationsübertragungssystem aus einem Terminal und einer tragbaren Datenträgeranordnung. Insbesondere betrifft sie ein Verfahren zur Überprüfung der Echtheit von tragbaren Datenträgeranordnungen bzw. ein Verfahren zur Überprüfung der Echtheit eines Terminals durch eine tragbare Datenträgeranordnung. Solche tragbaren Datenträgeranordnungen sind heute u.a. als sog. Chipkarten bekannt und werden häufig als Zahlungsmittel eingesetzt. Beispielsweise werden sog. intelligiente Speicherkarten, die einen elektronischen Schaltkreis mit einer Sicherheitslogik sowie einem elektronischen nichtflüchtigen Speicher enthalten, als vorausbezahlte Telefonkarten eingesetzt. In diesem Falle ist nicht unbedingt auszuschließen, daß in betrügerischer Absicht versucht wird, solche Chipkarten mit elektronischen Schaltungen oder mit Mikrorechnern zu simulieren und die derart simulierte Anordnung quasi als Falschgeld einzusetzen.

Um die Echtheit von Karten, unabhängig vom verwendeten Chip anhand spezifischer physikalischer Eigenschaften der Karten zu überprüfen, ist ein Verfahren mit sehr aufwendiger Prüftechnik, das sog. MM-Merkmal bekannt. Dieses ist in dem Buch von Beutelspacher, Kersten & Pfau "Chipkarten als Sicherheitswerkzeuge, Springer Verlag 1991, auf Seite 132 beschrieben. Wünschenswert wäre ein Verfahren zur Überprüfung der Echtheit einer tragbaren Datenträgeranordnung, wobei nur mit elektrischen bzw. elektronischen Mitteln und allein über den Chip die Echtheit der Karte verifizierbar ist. Aus der EP 0 321 728 C2 ist ein Verfahren bekannt, bei dem physikalisch bedingte Eigenheiten einer Halbleiterschaltung als Echtheitsmerkmal herangezogen werden. Trotz der Verwendung eines solchen Verfahrens ist jedoch eine hardware- oder softwaremäßige Simulation einer solchen tragbaren Datenträgeranordnung, die bei einem solchen Verfahren zur Echtheitsüberprüfung nicht als Fälschung erkannt werden, nicht ausschließbar.

Es sind auch Verfahren zur Echtheitsüberprüfung denkbar, bei denen ein zusätzliches, in der tragbaren Datenträgeranordnung vorhandenes Geheimnis ausgenutzt wird, ohne dessen Kenntnis ein Betrüger keine nicht als Fälschung erkennbare Simulation realisieren kann. Ein solches Geheimnis wäre als geheimer Schlüssel in einem Chip gegen direktes Auslesen über eine Logik leicht zu schützen. Bei der Durchführung eines entsprechenden Verfahrens zur Echtheitsprüfung wären jedoch Datenvergleiche und somit Datenübertragungen zwischen dem Chip der tragbaren Datenträgeranordnung und dem Prüfgerät erforderlich. Damit ein Betrüger nicht anhand dieser Datenübertragung Kenntnis von dem Geheimnis erlangen kann, darf dieses nicht im Klartext sondern nur über einen sicheren Kryptoalgorithmus verschlüsselt übertragen werden. Die Daten müssen außerdem von Versuch zu Versuch unterschiedlich sein.

Bei solchen, in anderem Zusammenhang bekannten Tests, erzeugt üblicherweise ein Terminal eine Zufallszahl und sendet diese als Klartext zur Datenträgeranordnung. In der Datenträgeranordnung wird diese Zahl mit einem geheimen Schlüssel verschlüsselt und als Kryptotext an das Terminal zurückgesandt. In dem Terminal, in dem der Kartenschlüssel vorliegen muß, wird dieser Verschlüsselungsvorgang nachvollzogen und somit ein erwarteter Kryptotext bereitgestellt. Stimmen die Kryptodaten des erwarteten Kryptotextes und des von der Datenträgeranordnung zurückgesandten Kryptotextes überein, wird die Datenträgeranordnung als echt erkannt. Der Schlüssel selbst muß dabei weder die Datenträgeranordnung noch das Terminal im Klartext verlassen.

Solche Verfahren sind in dem Buch von Beutelspacher, Kersten & Pfau "Chipkarten als Sicherheitswerkzeug" auf den Seiten 51 bis 66, insbesondere im Kapitel 4, Sicherheitsfunktionen auf den Seiten 55 ff. beschrieben. Hierbei wird die Autentifizierung nach dem Prinzip "Challange-and-Response" durchgeführt, wobei von einem Kommunikationspartner, wie z.B. einem Terminal Fragedaten zum anderen Kommunikationspartner, wie z.B. einer tragbaren Datenträgeranordnung übertragen werden, diese Fragedaten mit Hilfe eines Algorithmus und eines in der tragbaren Datenträgeranordnung enthaltenen geheimen Schlüssels verschlüsselt werden und zum Terminal als Antwortdaten zurückgesandt werden. Im Terminal können die Fragedaten parallel hierzu auf gleiche Weise verschlüsselt werden (Audentifizierung mit symmetrischem Algorithmus) oder mit Hilfe eines öffentlichen Schlüssels verschlüsselt werden, den die Karte bereitstellt (Audentifizierungsprozedur mit asymmetrischem Algorithmus) und die in dem Terminal erhaltenen Antwortdaten können mit den von der Datenträgeranordnung übermittelten Antwortdaten verglichen werden. Ein positives Vergleichsergebnis liefert eine positive Autentifizierung.

Bekannte Algorithmen sind jedoch kryptologisch nur dann in ausreichendem Maße sicher, wenn die Rechenleistung in der Datenträgeranordnung und die Wortlänge ausreichend groß sind. Solche sicheren Algorithmen werden in dem RSA-Verfahren oder in dem DES-Verfahren verwendet, die u.a. in dem obengenannten Buch "Chipkarten als Sicherheitswerkzeug" in den Kapiteln 3.2 "Symmetrische Algorithmen" auf Seite 21 ff. bzw. 3.3 "Asymmetrische Algorithmen" auf den Seiten 32 ff. beschrieben sind. Sie sind jedoch für sog. Wertkarten, wie z.B. Telefonkarten viel zu aufwendig. Diese Datenträgeranordnungen würden bei Verwendung solcher Algorithmen um ein Vielfaches teurer als bekannte Wertkartenanordnungen.

Aufgabe der Erfindung ist das Bereitstellen eines Verfahrens zur Überprüfung der Echtheit einer tragbaren Datenträgeranordnung mit Halbleitervorrichtung, mit dem auch auf der Grundlage von Schaltungsanalysen und/oder aufgrund der Kenntnis des zwischen einer echten Datenträgeranordnung und einem Prüfgerät stattfindenden Dialogen realisierte Simulationen erkannt werden, wobei in der tragbaren Datenträgeranordnung selbst kein übermäßig großer Schaltungsaufwand erforderlich ist.

Diese Aufgabe wird gelöst durch ein Verfahren mit den Merkmalen des Patentanspruches 1. Günstige Ausgestaltungsformen sind Gegenstand von Unteransprüchen.

Die Erfindung geht von der Erkenntnis aus, daß die kryptologische Sicherheit eines konventionellen Kryptosystemes dadurch gegeben ist, daß bei einer evtl. Kryptoanalyse ein Rückrechnen des Schlüssels aus den übertragenen Klartext- und Schlüsseltextdaten zu lange Rechenzeiten erfordern würde.

Demgegenüber wird erfindungsgemäß die Durchführung einer Kryptpanalyse mit Hilfe einer zusätzlichen Sicherheitslogik unterbunden bzw. eingeschränkt, die überprüft, ob eine vorgegebene elektronische Bedingung erfüllt ist, wobei die Häufigkeit, mit der diese Bedingung erfüllt sein kann, eingeschränkt ist. Hierbei wird ein Kryptoalgorithmus beispielsweise mit einem auf der Grundlage eines nichtflüchtigen Speichers realisierten Zähler in der Weise kombiniert, daß die korrekte Benutzung des Algorithmus erst möglich wird, nachdem eine noch unverbrauchte Zähleinheit nichtflüchtig geschrieben worden ist. Ist insgesamt je Zähleinheit eine Datenübertagung erlaubt, z.B. die Ubertragung einer Zufallszahl von einer Prüfeinrichtung zur tragbaren Datenträgeranordnung als Klartext oder die Übertragung eines Schlüsseltextes von der tragbaren Datenträgeranordnung zu einer Prüfeinrichtung, so hängt die Anzahl der mit einer einzigen Halbleiteranordnung in einer tragbaren Datenträgeranordnung möglichen Analyseversuche nicht mehr nur von der Leistung eines Rechners sondern vom begrenzbaren Umfang eines Zählers ab. Sowohl die Rechenleistung als auch die Verarbeitungslänge bzw. Schlüssellänge des Algorithmus innerhalb der tragbaren Datenträgeranordnung müssen nur noch so bemessen sein, daß mit der eingeschränkten Anzahl möglicher Klartext- und Schlüsseltext-Analysen ein Zurückrechnen des Geheimnisses noch nicht möglich ist.

Die hierzu erforderliche zusätzliche Zählerlogik beansprucht in einer Halbleitervorrichtung einer entsprechenden tragbaren Datenträgeranordnung nur sehr wenig Chipfläche im Vergleich zum Mehraufwand, den ein heute als sicher geltender, aber uneingeschränkt benutzbarer Kryptoalgorithmus beanspruchen würde.

Eine andere zu erfüllende elektronische Bedingung kann die Änderung des Programmierzustandes eines Speichers bzw. einer Speicherzelle sein. Falls diese Änderung des Programmierzustandes abhängig von einer Bedingung reversibel ist, genügt es, für diese Zwecke einen Merkerspeicher oder Statusspeicher mit geringem Speicherumfang zu verwenden.

Bei einer günstigen Ausgestaltungsform der Erfindung wird in der tragbaren Datenträgeranordnung ein Zähler verwendet, der nach erfolgreicher Echtheitsprüfung wieder rücksetzbar bzw. löschbar ist. Hierbei ist es empfehlenswert, diesen Löschvorgang mit einer weiteren Sicherheitsprozedur zu koppeln. Ein hierzu geeignetes Verfahren zur Überprüfung der Berechtigung eines Löschvorganges kann hierbei ähnlich dem beschriebenen Verfahren zur Echtheitsprüfung des Chips ausgeführt sein, muß jedoch um gekehrt ablaufen. Bei einer solchen Berechtigungsprüfung für einen Löschvorgang wird im Terminal das Verschlüsseln einer neuen Zufallszahl mit dem in der tragbaren Datenträgeranordnung enthaltenen Schlüssel durchgeführt, bevor der Klartext und der Schlüsseltext zur tragbaren Datenträgeranordnung übertragen werden. Innerhalb der tragbaren Datenträgeranordnung wird dann überprüft, ob der übertragene Kryptotext und ein in der tragbaren Datenträgeranordnung mit Hilfe des Schlüssels und des übertragenen Klartextes gebildeter Kryptotext übereinstimmen. Bei Übereinstimmung der beiden Kryptotexte wird eine innerhalb der Chiplogik der tragbaren Datenträgeranordnung integrierte Löschsperre aufgehoben. Dadurch kann ein Betrüger, der den in der tragbaren Datenträgeranordnung enthaltenen Schlüssel nicht kennt, den in der tragbaren Datenträgeranordnung enthaltenen, durch seinen Zählumfang den Sicherheitsgrad des Verschlüsselungsverfahrens bestimmenden Zähler nicht löschen.

In einer besonders günstigen Ausgestaltungsform der Erfindung wird zur Berechtigungsüberprüfung eines Löschvorganges und zum Echtheitsnachweis der gleiche Algorithmus und der gleiche Schlüssel verwendet, so daß mit einem relativ geringen Schaltungsaufwand zwei Überprüfungsverfahren durchführbar sind.

Im Einzelnen betrifft die Erfindung ein Verfahren zur Autentifizierung eines Systemteiles durch einen anderen Systemteil in einem Informationsübertragungssystem aus einem Terminal und einer tragbaren Datenträgeranordnung nach dem "Challange-and-Response"-Prinzip, wobei ein Systemteil jeweils von Vorgang zu Vorgang verschiedene Fragedaten zum anderen Systemteil überträgt, diese Fragendaten im anderen Systemteil mindestens abhängig von einem Algorithmus und einem geheimen Schlüssel zu Antwortdaten verändert werden, diese Antwortdaten dann zu dem die Fragedaten absendenden Systemteil zurückgesendet werden, die Fragedaten in dem diese bereitstellenden Systemteil ebenfalls mindestens abhängig von einem Algorithmus und einem Schlüssel zu Antwortdaten verändert werden und die beiden unterschiedlich erstellten Antwortdaten dann verglichen werden, wobei die Übereinstimmung der beiden Antwortdaten eine positive Autentifikation bedeuten. Erfindungsgemäß muß hierbei zur Durchführung eines jeden Autentifikationsvorganges zusätzlich eine vorgegebene elektronische Bedindung erfüllt sein muß, wobei die Häufigkeit, mit der diese Bedingung erfüllt sein kann, eingeschränkt sein.

Günstigenfalls kann ein Autentifikationsvorgang erst ablaufen, wenn die besagte elektronische Bedingung erfüllt ist. Auch kann eine Sperrlogik eine Ausgabe von Antwortdaten verhindern, die in irgendeinem Zusammenhang mit Fragedaten oder mit dem geheimen Schlüssel des Algorithmus stehen, solange die vorgegebene Bedingung nicht erfüllt ist.

Als Bedingung das Programmieren mindestens einer Speicherzelle eines Speichers mit begrenztem Speicherumfang vorgesehen sein, wobei gegebenenfalls in Abhängigkeit von einer weiteren Bedingung der Programmiervorgang rückgängig gemacht werden kann. Auch kann als Bedingung das Ändern des Zählerstandes eines nichtflüchtigen Zählers mit begrenztem Zählumfang vorgesehen sein, wobei ggf. der Zähler abhängig von einer weiteren Bedingung rücksetzbar ist.

In einer günstigen Ausgestaltung der Erfindung ist vorgesehen, daß das Terminal Fragedaten zur tragbaren Datenträgeranordnung überträgt, daß in der tragbaren Datenträgeranordnung diese Fragedaten mindestens abhängig von einem Algorythmus und einem geheimen Schlüssel zu Antwortdaten verändert werden, daß diese Antwortdaten dann, wenn in der tragbaren Datenträgeranordnung eine vorgegebene elektronische Bedingung erfüllt ist, zum Terminal übertragen werden, daß im Terminal die Fragedaten unter Verwendung eines Algorythmus und eines Schlüssels zu solchen Antwortdaten verändert werden, wie sie von einer echten tragbaren Datenträgeranordnung aufgrund der entsprechenden Fragedaten ausgegeben würden und daß im Terminal durch Vergleich der im Terminal erstellten Antwortdaten mit den von der tragbaren Datenträgeranordnung übertragenen Antwortdaten die Echtheit der tragbaren Datenträgeranordnung ermittelt wird.

Hierbei kannn das Verändern der von dem Terminal zur tragbaren Datenträgeranordnung übertragenen Fragedaten außerdem von einer in der tragbaren Datenträgeranordnung enthaltenen und dem Terminal zugänglichen Information abhängen. Die Fragedaten können zusätzlich von einer bei jeder Autentifikationsprüfung sich ändernden Größe abhängen, wobei diese sich bei jeder Autentifikationsprüfung ändernde Größe der Zählerstand eines Zählers sein kann. Die Beeinflußung der Fragedaten kann außerdem von einer sich durch die Benutzung der tragbaren Datenträgeranordnung ändernden Größe - wie z.B. einem Kontostand - abhängen.

In einer weiteren Ausgestaltung der Erfindung ist vorgesehen, daß die tragbare Datenträgeranordnung Fragedaten zum Terminal überträgt, daß im Terminal diese Fragedaten mindestens abhängig von einem Algorythmus und einem geheimen Schlüssel zu Antwortdaten verändert werden, daß diese Antwortdaten dann, wenn im Terminal eine vorgegebene elektronische Bedingung erfüllt ist, zur tragbaren Datenträgeranordnung übertragen werden, daß in der tragbaren Datenträgeranordnung die Fragedaten unter Verwendung eines Algorythmus und eines Schlüssels zu solchen Antwortdaten verändert werden, wie sie von einem echten Terminal aufgrund der entsprechenden Fragedaten ausgegeben würden und daß in der tragbaren Datenträgeranordnung durch Vergleich der in der tragbaren Datenträgeranordnung erstellten Antwortdaten mit den von dem Terminal übertragenen Antwortdaten die Echtheit des Terminals ermittelt wird.

Eine andere Ausgestaltung eines erfindungsgemäßen Verfahrens kann vorsehen, daß das Terminal Fragedaten erzeugt, daß es diese Fragedaten mindestens in Abhängikeit von einem geheimen Schlüssel und einem Algorythmus in vorgegebener Weise zu Antwortdaten verändert, daß sowohl Fragedaten als auch Antwortdaten vom Terminal zur tragbaren Datenträgeranordnung übertragen werden, daß in der tragbaren Datenträgeranordnung die Fragedaten in gleicher, vorgegebenerweise zu Antwortdaten verändert werden und die in der tragbaren Datenträgeranordnung erzeugten Antwortdaten mit den vom Terminal übertragenen Antwortdaten zur Echtheitsüberprüfung verglichen werden. Hierbei kann das Verändern der Fragedaten in Antwortdaten zusätzlich von einer sich bei jedem Autentifikationsversuch ändernden Größe abhängen.

Die weitere Bedingung kann in den vorgenannten Fällen die erfolgreiche Autentifikation der tragbaren Datenträgeranordnung und/oder die erfolgreiche Autentifikation des Terminals sein. Falls die Datenträgeranordnung und das Terminal erfolgreich autentifiziert sein müssen, kann für beide Autentifikationsvorgänge jeweils der Zählerstand geändert werden oder es kann für beide Autentifikationsvorgänge nur einmald der Zählerstand geändert werden.

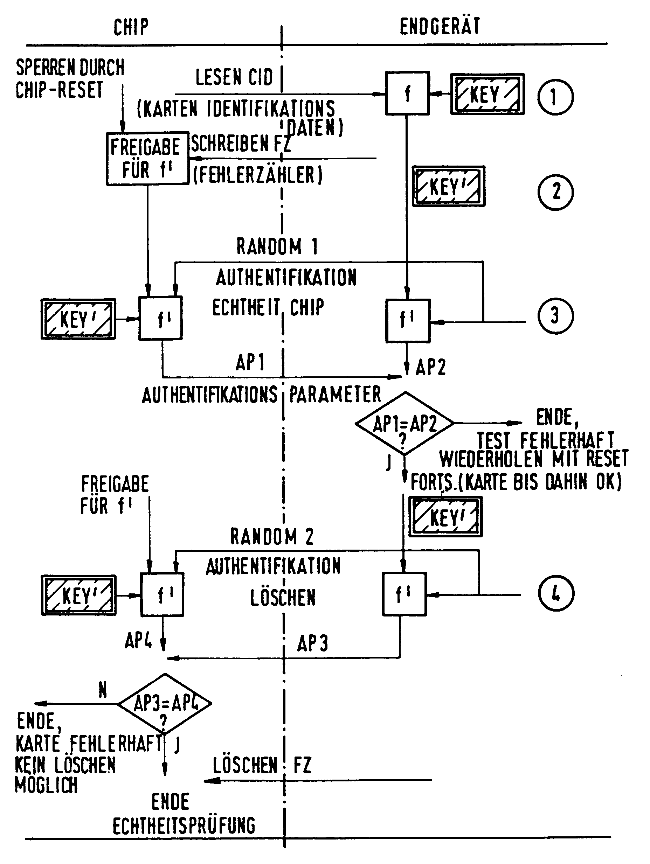

Die Figur zeigt den Ablauf einer Ausführungsform eines erfindungsgemäßen Verfahrens. Hierbei ist die körperliche Zuordnung der einzelnen Verfahrensschritte durch deren Anordnung auf der linken oder rechten Seite einer strichpunktierten, senkrechten Trennlinie kenntlich gemacht. Die links von der Trennlinie in dem mit CHIP bezeichneten Teil der Figur angeordneten Bedingungen beziehen sich auf eine tragbare Datenträgeranordnung, hier eine Chipkarte. Die rechte Hälfte der Figur ist mit ENDGERÄT gekennzeichnet und enthält Angaben, die in Bezug zu dem Terminal stehen.

In einer mit 1 gekennzeichneten Verfahrensstufe wird im Chip sichergestellt, daß eine nach erfolgreicher Autentifikation aufzuhebende Sperre gesetzt ist. Im Beispiel wird durch ein Rücksetzen des Chip CHIP-RESET die zu schreibende Funktion gesperrt. Im Endgerät wird in dieser Verfahrensstufe sichergestellt, daß im Chip und im Endgerät der gleiche Schlüssel KEY' vorliegen. Im dargestellten Beispiel liest das Endgerät hierzu im Chip enthaltene Kartenidentifikationsdaten CID und ermittelt mit deren Hilfe und ggf. mit einem im Endgerät enthaltenen speziellen Schlüssel KEY unter Verwendung einer Funktion f den Schlüssel KEY'. Ein solcher Vorgang wird in einem Rechenwerk mit Hilfe eines Mikroprozessors oder mit Hilfe einer Logikschaltung durchgeführt.

In einer mit 2 gekennzeichneten Verfahrensstufe veranlaßt das Endgerät, daß in der tragbaren Datenträgeranordnung CHIP eine vorgegebene elektronische Bedingung erfüllt ist. Hierzu bewirkt das Endgerät im Ausführungsbeispiel der Figur, daß ein im Chip enthaltener Fehlerzähler FZ geschrieben wird. In der Datenträgeranordnung CHIP wird unter der Bedingung, daß die obengenannte Sperre aktiviert ist und der Fehlerzähler geschrieben ist, ein Rechenwerk freigegeben, um einen Autentifikationsvorgang durchzufüren.

In einer mit 3 gekennzeichneten Verfahrensstufe veranlaßt das Endgerät ein Rechenwerk, in der tragbaren Datenträgeranordnung CHIP, unter Verwendung eines in dieser enthaltenen Schlüssels KEY' und Autentifikationsdaten RANDOM1 mit Hilfe einer Funktion f' Autentifikationsparameter AP1 zu ermitteln. Außerdem ermittelt ein Rechenwerk in dem Endgerät unter Verwendung des in einer früheren Verfahrensstufe ermittelten Schlüssels KEY' und denselben Autentifikationsdaten RANDOM1 mit Hilfe der gleichen Funktion f' Autentifikationsparameter AP2.

Das Endgerät vergleicht die Autentifikationsparameter AP1 der Datenträgeranordnung CHIP mit seinen eigenen AP2. Sind die Parameter AP1 und AP2 unterschiedlich, so wird der Ablauf beendet und der Test als fehlerhaft erkannt. Sind die Parameter AP1 und AP2 gleich, so ist eine Autentifikation der Datenträgeranordnung durch das Endgerät erfolgreich und der Zugriffsvorgang kann fortgesetzt werden.

Im dargestellten Ausführungsbeispiel ist vorgesehen, daß der Fehlerzähler FZ vor Beendigung eines berechtigten Zugriffsvorganges durch das Endgerät löschbar ist. Hierzu wird im dargestellten Ausführungsbeispiel ein Autentifikationsvorgang zur Echtheitsprüfung des Endgerätes durchgeführt, wobei dieselben Schlüssel KEY' und dieselben Funktionen f' verwendet werden, wie bei der vorgenannten Echtheitsprüfung der Datenträgeranordnung CHIP.

Hierbei kann eine Freigabe des Rechenwerkes in der Datenträgeranordnung für einen Autentifikationsvorgang an das Erfülltsein einer Bedingung geknüpft sein. Eine solche Bedingung kann beispielsweise ein erfolgter Buchungsvorgang sein oder irgendein erfolgter Verfahrensablauf, der nur bei Verwendung einer als echt erkannten Karte in einem Endgerät abläuft.

In einer mit 4 gekennzeichneten Verfahrensstufe, die üblicherweise nicht unmittelbar auf eine mit 3 gekennzeichnete Verfahrensstufe der Echtheitsprüfung des Datenträgers folgt, ermittelt ein Rechenwerk im Endgerät unter Verwendung des im Endgerät vorliegenden Schlüssels KEY' und Autentifikationsdaten RANDOM2 mit Hilfe der im Endgerät vorliegenden Funktion f' Autentifikationsparameter AP3. Ein Rechenwerk in der tragbaren Datenträgeranordnung ermittelt unter Verwendung des in ihr vorliegenden gleichen Schlüssels KEY' und derselben Autentifikationsdaten RANDOM2 mit Hilfe der in der Datenträgeranordnung vorliegenden Funktion f' Autentifikationsparameter AP4.

In der tragbaren Datenträgeranordnung werden die Parameter AP3 und AP4 verglichen. Stimmen diese nicht überein, wird die Echtheitsprüfung beendet, da entweder das Endgerät nicht zum Löschen berechtigt ist oder die Datenträgeranordnung fehlerhaft ist. Ein Löschen des Fehlerzählers wird hierbei nicht zugelassen. Stimmen die Parameter AP3 und AP4 überein, so bewirkt das Endgerät ein Löschen bzw. Rücksetzen des Fehlerzählers FZ und die Echtheitsprüfung wird beendet.

## Patentansprüche

1. Verfahren zur Autentifizierung eines Systemteiles durch einen anderen Systemteil in einem Informationsübertragungssystem aus einem Terminal und einer tragbaren Datenträgeranordnung nach dem "Challange-and-Response"-Prinzip, wobei ein Systemteil jeweils von Vorgang zu Vorgang verschiedene Fragedaten zum anderen Systemteil überträgt, diese Fragendaten im anderen Systemteil mindestens abhängig von einem Algorithmus und einem geheimen Schlüssel zu Antwortdaten verändert werden, diese Antwortdaten dann zu dem die Fragedaten absendenden Systemteil zurückgesendet werden, die Fragedaten in dem diese bereitstellenden Systemteil ebenfalls mindestens abhängig von einem Algorithmus und einem Schlüssel zu Antwortdaten verändert werden und die beiden unterschiedlich erstellten Antwortdaten dann verglichen werden, wobei die Übereinstimmung der beiden Antwortdaten eine positive Autentifikation bedeuten, **dadurch gekennzeichnet,** daß zur Durchführung eines jeden Autentifikationsvorganges zusätzlich eine vorgegebene elektronische Bedindung erfüllt sein muß, wobei die Häufigkeit, mit der diese Bedingung erfüllt sein kann, eingeschränkt ist.

2. Verfahren nach Anspruch 1, **dadurch gekennzeichnet,** daß ein Autentifikationsvorgang erst ablaufen kann, wenn die besagte elektronische Bedingung erfüllt ist.

3. Verfahren nach einem der vorhergehenden Ansprüche, **dadurch gekennzeichnet,** daß eine Sperrlogik eine Ausgabe von Antwortdaten verhindert, die in irgendeinem Zusammenhang mit Fragedaten oder mit dem geheimen Schlüssel des Algorithmus stehen, solange die vorgegebene Bedingung nicht erfüllt ist.

4. Verfahren nach einem der vorhergehenden Ansprüche, **dadurch gekennzeichnet,** daß als Bedingung das Programmieren mindestens einer Speicherzelle eines Speichers mit begrenztem Speicherumfang vorgesehen ist.

5. Verfahren nach Anspruch 4, **dadurch gekennzeichnet,** daß in Abhängigkeit von einer weiteren Bedingung der Programmiervorgang rückgängig gemacht werden kann.

6. Verfahren nach einem der Ansprüche 1 bis 3, **dadurch gekennzeichnet,** daß als Bedingung das Ändern des Zählerstandes eines nichtflüchtigen Zählers mit begrenztem Zählumfang vorgesehen ist.

7. Verfahren nach Anspruch 6, **dadurch gekennzeichnet,** daß der Zähler abhängig von einer weiteren Bedingung rücksetzbar ist.

8. Verfahren nach einem der Ansprüche 1 bis 7 zur Überprüfung der Echtheit einer tragbaren Datenträgeranordnung durch ein zugeordnetes Terminal, **dadurch gekennzeichnet,** daß das Terminal Fragedaten zur tragbaren Datenträgeranordnung überträgt, daß in der tragbaren Datenträgeranordnung diese Fragedaten mindestens abhängig von einem Algorythmus und einem geheimen Schlüssel zu Antwortdaten verändert werden, daß diese Antwortdaten dann, wenn in der tragbaren Datenträgeranordnung eine vorgegebene elektronische Bedingung erfüllt ist, zum Terminal übertragen werden, daß im Terminal die Fragedaten unter Verwendung eines Algorythmus und eines Schlüssels zu solchen Antwortdaten verändert werden, wie sie von einer echten tragbaren Datenträgeranordnung aufgrund der entsprechenden Fragedaten ausgegeben würden und daß im Terminal durch Vergleich der im Terminal erstellten Antwortdaten mit den von der tragbaren Datenträgeranordnung übertragenen Antwortdaten die Echtheit der tragbaren Datenträgeranordnung ermittelt wird.

9. Verfahren nach Anspruch 8, **dadurch gekennzeichnet,** daß das Verändern der von dem Terminal zur tragbaren Datenträgeranordnung übertragenen Fragedaten außerdem von einer in der tragbaren Datenträgeranordnung enthaltenen und dem Terminal zugänglichen Information abhängt.

10. Verfahren nach einem der vorgehenden Ansprüche, **dadurch gekennzeichnet,** daß die Fragedaten zusätzlich von einer bei jeder Autentifikationsprüfung sich ändernden Größe abhängt.

11. Verfahren nach Anspruch 10, **dadurch gekennzeichnet,** daß diese sich bei jeder Autentifikationsprüfung ändernde Größe der Zählerstand eines Zählers ist.

12. Verfahren nach einem der Ansprüche 8, 9, 10 oder 11, **dadurch gekennzeichnet,** daß die Beeinflußung der Fragedaten außerdem von einer sich durch die Benutzung der tragbaren Datenträgeranordnung ändernden Größe - wie z.B. einem Kontostand - abhängt.

13. Verfahren nach einem der Ansprüche 1 bis 7 zur Überprüfung der Echtheit eines Terminals durch eine tragbare Datenträgeranordnung, **dadurch gekennzeichnet,** daß die tragbare Datenträgeranordnung Fragedaten zum Terminal überträgt, daß im Terminal diese Fragedaten mindestens abhängig von einem Algorythmus und einem geheimen Schlüssel zu Antwortdaten verändert werden, daß diese Antwortdaten dann, wenn im Terminal eine vorgegebene elektronische Bedingung erfüllt ist, zur tragbaren Datenträgeranordnung übertragen werden, daß in der tragbaren Datenträgeranordnung die Fragedaten unter Verwendung eines Algorythmus und eines Schlüssels zu solchen Antwortdaten verändert werden, wie sie von einem echten Terminal aufgrund der entsprechenden Fragedaten ausgegeben würden und daß in der tragbaren Datenträgeranordnung durch Vergleich der in der tragbaren Datenträgeranordnung erstellten Antwortdaten mit den von dem Terminal übertragenen Antwortdaten die Echtheit des Terminals ermittelt wird.

14. Verfahren nach einem der Ansprüche 1 bis 7 zur Überprüfung der Echtheit eines Terminals durch eine zugeordnete tragbare Datenträgeranordnung, **dadurch gekennzeichnet,** daß das Terminal Fragedaten erzeugt, daß es diese Fragedaten mindestens in Abhängikeit von einem geheimen Schlüssel und einem Algorythmus in vorgegebener Weise zu Antwortdaten verändert, daß sowohl Fragedaten als auch Antwortdaten vom Terminal zur tragbaren Datenträgeranordnung übertragen werden, daß in der tragbaren Datenträgeranordnung die Fragedaten in gleicher, vorgegebenerweise zu Antwortdaten verändert werden und die in der tragbaren Datenträgeranordnung erzeugten Antwortdaten mit den vom Terminal übertragenen Antwortdaten zur Echtheitsüberprüfung verglichen werden.

15. Verfahren nach Anspruch 14, **dadurch gekennzeichnet,** daß das Verändern der Fragedaten in Antwortdaten zusätzlich von einer sich bei jedem Autentifikationsversuch ändernden Größe abhängt.

16. Verfahren nach einem der Ansprüche 5 oder 7, **dadurch gekennzeichnet,** daß die weitere Bedingung die erfolgreiche Autentifikation der tragbaren Datenträgeranordnung ist.

17. Verfahren nach einem der Ansprüche 5 oder 7, **dadurch gekennzeichnet,** daß die weitere Bedingung die erfolgreiche Autentifikation des Terminals ist.

18. Verfahren nach einem der Ansprüche 5 oder 7, **dadurch gekennzeichnet,** daß die weitere Bedingung die erfolgreiche Autentifikation der tragbaren Datenträgeranordnung und außerdem eine erfolgreiche Autentifikation des Terminals ist.

19. Verfahren nach Anspruch 18, wobei die vorgegebene elektrische Bedingung das Ändern des Zählerstandes eines nicht flüchtigen Zählers mit begrenztem Zählumfang ist, **dadurch gekennzeichnet,** daß für beide Autentifikationsvorgänge jeweils der Zählerstand geändert wird.

20. Verfahren nach einem der Ansprüche 18 oder 19, **dadurch gekennzeichnet,** daß für beide Autentifikationsvorgänge nur einmald der Zählerstand geändert werden muß.
